# EUROPEAN PATENT APPLICATION

(11) **EP 4 074 456 A1**
(43) Date of publication of application: **19.10.2022**
(21) Application number: 22167375.9
(22) Date of filing: 08.04.2022
(51) Int. Cl.: B23K 35/02, B23K 35/24, B23K 35/30, C23C 24/08, C23C 24/10

(54) **METHODS OF COATING COMPONENTS WITH COLD SPRAY AND BRAZING COATED COMPONENTS**

(30) Priority: 15.04.2021 US 202117231592
(71) Applicant: General Electric Company, Schenectady, NY 12345 (US)
(72) Inventor: INAMDAR, Chirayu, 560066 Bangalore (IN); MAHALINGAM, Nalini, 560066 Bangalore (IN); MAHALINGAM, Anantharaman, 560066 Bangalore (IN); GORMAN, Mark Daniel, Cincinnati, 45215 (US); MADEWAD, Ashay, 560066 Bangalore (IN); NEELAPPAGOUDAR, Vishwanath, 560066 Bangalore (IN)
(74) Representative: Openshaw & Co.

(57) **Abstract**

A method for joining two or more metallic components. The method includes operating a cold-spray apparatus to deposit a feedstock comprising nickel-based alloy particles on a braze region of a first metallic component to form a nickel-containing coating on the braze region. The method also includes brazing the first metallic component and a second metallic component by exposing the braze region to a braze material to form a braze joint that bonds the first metallic component to the second metallic component.

## Description

### FIELD

The present disclosure generally relates to the joining of parts, and more particularly to the joining of metal parts.

### BACKGROUND

Metallic components, especially gas turbine engine components, are often bonded to each other through brazing. In brazing, a metallic alloy is used to form a structural joint between two components. During brazing, oxide films can form on surfaces of metal articles that can negatively impact the formation of the braze joint. There is thus a need for solution directed to preventing the formation of such oxide films on metal articles to be joined by brazing.

### BRIEF DESCRIPTION

In one aspect, embodiments of the present disclosure relate to a method of joining two or more metallic components. The method includes operating a cold-spray apparatus to deposit a feedstock comprising nickel-based alloy particles on a braze region of a first metallic component to form a nickel-containing coating on the braze region. The method also includes brazing the first metallic component and a second metallic component by exposing the braze region to a braze material to form a braze joint that bonds the first metallic component to the second metallic component.

### BRIEF DESCRIPTION OF THE DRAWINGS

The above and other aspects, features, and advantages of the present disclosure will become more apparent in light of the subsequent detailed description when taken in conjunction with the accompanying drawings in which:
FIG. 1 illustrates a component being coated by a cold spray process in accordance with exemplary embodiments of the present disclosure;
FIG. 2 illustrates the coated component of FIG. 1 having a coating thereon in accordance with exemplary embodiments of the present disclosure;
FIG. 3 illustrates the coated component of FIG. 1 being joined to another component via a braze process in accordance with exemplary embodiments of the present disclosure; and
FIG. 4 illustrates a flowchart for a method of joining parts in accordance with exemplary embodiments of the present disclosure.

### DETAILED DESCRIPTION

One or more embodiments of the present disclosure will be described below. Unless defined otherwise, technical and scientific terms used herein have the same meaning as is commonly understood by one of ordinary skill in the art to which this invention belongs.

The terms "a" and "an" do not denote a limitation of quantity, but rather denote the presence of at least one of the referenced items. Approximating language, as used herein throughout the specification and claims, may be applied to modify any quantitative representation that could permissibly vary without resulting in a change in the basic function to which it is related. Accordingly, a value modified by a term or terms, such as "about", are not to be limited to the precise value specified. Additionally, when using an expression of "about a first value - a second value," the about is intended to modify both values. In at least some instances, the approximating language may correspond to the precision of an instrument for measuring the value.

Here, and throughout the specification and claims, range limitations may be combined and/or interchanged, such ranges are identified and include all the sub-ranges contained therein unless context or language indicates otherwise. Any numerical values recited herein include all values from the lower value to the upper value in increments of one unit provided that there is a separation of at least 2 units between any lower value and any higher value. As an example, if it is stated that the amount of a component or a value of a process variable such as, for example, temperature, pressure, time and the like is, for example, from 1 to 90, it is intended that values such as 15 to 85, 22 to 68, 43 to 51, 30 to 32 etc. are expressly enumerated in this specification. For values which are less than one, one unit is considered to be 0.0001, 0.001, 0.01 or 0.1 as appropriate. These are only examples of what is specifically intended and all possible combinations of numerical values between the lowest value and the highest value enumerated are to be considered to be expressly stated in this application in a similar manner.

The coatings, components, or processes disclosed herein can include, consist essentially of, or consist of, the components of the present disclosure as well as other materials described herein. As used herein, "consisting essentially of" means that the composition or component may include additional materials, but only if the additional materials to not materially alter the basic and novel characteristics of the claimed composition or methods.

Metallic components can be joined by brazing. However, when metallic components are heated to brazing temperatures, they react with any oxygen present in the atmosphere, which causes an oxide layer to form on surfaces of the metallic components. Many braze materials do not bond well with oxides, which makes forming an effective braze joint difficult. Accordingly, metallic components can be coated to prevent the formation of oxides on the metal components, thus ensuring an effective braze.

Methods for coating components in preparation for brazing include chemical bath processes that involve submerging the component in a bath to deposit a metal layer, e.g., nickel, on exposed surfaces of the component. Such chemical bath processes suffer from many drawbacks. For instance, in order to coat the part, the entire part must be submerged in the chemical bath. As such, large amounts of active compounds and solvents are used. Left over solvents and reaction products must be disposed of, which generates waste and potential environmental hazards. Furthermore, areas of the part where no coating is desired must be masked. Extensive surface cleaning and surface preparation are required prior to coating. Additional heat treatments are also required after coating to ensure that the chemically-deposited coating does not risk embrittlement. Furthermore, coating thicknesses for bath-coated parts is limited and coating uniformity can be difficult to achieve. Thus, improved methods for applying coatings on metal parts to be brazed are needed.

Embodiments of the present disclosure provide a method for applying a nickel-containing coating on a metallic component and brazing the metallic component to join it to another metallic component. The method includes operating a cold-spray apparatus to deposit a feedstock comprising nickel-based alloy particles on a braze region of a first metallic component to form a nickel-containing coating on the braze region. The method also includes brazing the first metallic component and a second metallic component by exposing the braze region to a braze material to form a braze joint that bonds the first metallic component to the second metallic component.

Depositing the nickel coating via a cold spray method provides improvements over certain chemical bath application processes. For example, application of the nickel coating via cold spray generates less waste. No special cleaning or surface treatment of the part is required before applying the nickel coating. The cold spray process allows for a more uniform application of the nickel coating especially on parts having complex geometries. Further, a wider range of coating thicknesses can be achieved. For example, the cold spray process can be used to apply a thicker nickel coating as compared to chemical bath processes.

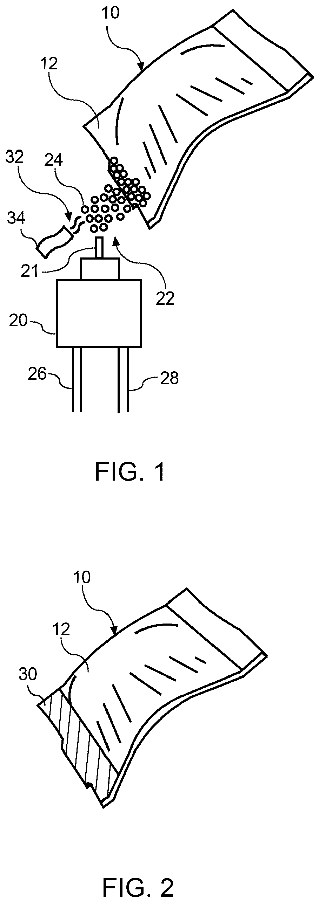

Referring to FIG. 1, an exemplary component 10 is shown in the form of a stater vane of a turbine engine. However, it is to be understood that the metallic component 10 is not limited to any particular shape or component, and may be any suitable metallic component. For example, in certain embodiments the component 10 can include an alloy or superalloy material. In the case of turbine components, the component may be in the form of blades, vanes, buckets, nozzles, and combinations thereof.

The component 10 includes a surface 12 onto which a coating can be applied. A cold spray gun 20 is shown spraying a stream 22 of particles 24 onto the surface 12 of the component 10. Cold spray methods use a cold spray gun 20 that receives a high pressure gas and a feedstock of deposit material, such as through the respective feed tubes 26, 28. During cold spraying, the particles 24 are introduced at a high pressure into the gas stream in the cold spray gun 20 and emitted from a nozzle 21. The particles 24 are accelerated to a high velocity in the gas stream and flow easily from the nozzle 21 of the cold spray gun 20 on to the surface 12 of the component 10. The particles 24 impact the surface 12 of the component 10 at a high velocity. The kinetic energy of the particles 24 causes the particles 24 to deform and flatten on impact with the surface 12 of the component 10. The flattening promotes a metallurgical, mechanical, or combination of metallurgical and mechanical bond with the surface 12 of the component 10 and results in a deposit on the surface 12. In certain embodiments, thermal energy 32 may be directed at the surface 12 or the particles 24 using a heat gun 34 (or other heating device) during the coating process.

A carrier gas is used for carrying the particles 24 for depositing. The carrier gas can be any suitable gas including inert gases, e.g. He, Ar, etc. or N₂. In some embodiments, a carrier gas having at least 50 volume % of nitrogen is used for the cold spray. In one embodiment, the carrier gas includes at least 75 volume % of nitrogen. In one embodiment, the carrier gas consists essentially of nitrogen. In one embodiment, the carrier gas used for depositing is essentially free of helium. In one embodiment, the carrier gas temperature is in the range from about 20° C. to about 1200° C. (e.g., about 500° C. to about 1100° C., such as about 650° C. to about 1100° C). In one embodiment, operating the cold spray apparatus used herein comprises accelerating the particles 24 to a velocity in the range from about 500 m/s to about 1100 m/s.

Although referred to as a cold spray process, the gas stream may be heated, but to a sprayed temperature that is less than the melting point of the particles 24 to minimize in-flight oxidation and phase changes in the deposited material. For example, the particles 24 may be sprayed at a temperature of about 500° C. to about 1100° C. (e.g., about 650° C. to about 1100° C.). In one embodiment, the particles 24 may be sprayed at a relatively low temperature (e.g., about 500° C. to about 800° C., such as about 650° C. to about 800° C.). In other embodiments, the particles 24 may be sprayed at higher temperatures, but still below the melting point of the particle material (e.g., about 800° C. to about 1100° C., such as about 800° C. to about 950° C.). As a result of the relatively low deposition temperatures (i.e., below the melting point of the particle material) and very high velocities, cold spray processes offer the potential for depositing well-adhering, mechanically/metallurgically bonded, dense, hard and wear-resistant coatings whose purity depends primarily on the purity of the feedstock powder used.

The particles 24 forming the deposit material on the surface 12 may include a metal and/or a metal alloy, such as, for example, metals, refractory metals, alloys, superalloys, or composite materials in powder form. In one embodiment, the particles 24 have a composition that is compatible with the material of the component 10, such as having a composition that is substantially identically to the material of the component 10. However, in other embodiments, the particles 24 may have a composition that is different than that of the material of the component 10.

In certain embodiments, the component 10 and/or the particles 24 can include a superalloy material. Example of superalloy materials include those formed of a nickel-base or a cobalt-base alloy, wherein nickel or cobalt is the single greatest element in the superalloy by weight. Illustrative nickel-base superalloys include at least about 40 wt. % Ni, and one or more of cobalt, chromium, aluminum, tungsten, molybdenum, titanium, and iron. Examples of nickel-base superalloys are designated by the trade names Inconel^{®}, Nimonic^{®}, Rene^{®} (e.g., Rene^{®}80-, Rene^{®}95, Rene^{®}142, and Rene^{®}N5 alloys), and Udimet^{®}, and include directionally solidified and single crystal superalloys. Illustrative cobalt-base superalloys include at least about 30 wt. % Co, and one or more of nickel, chromium, aluminum, tungsten, molybdenum, titanium, and iron. Examples of cobalt-base superalloys are designated by the trade names Haynes^{®}, Nozzaloy^{®}, Stellite^{®} and Ultimet^{®}.

In one particular embodiment, the particles 24 are formed from a nickel-based alloy, such as those described above (e.g., RENE^{®}) having certain oxidation-prone materials removed, e.g., aluminum and titanium. A non-limiting example of suitable nickel-based alloy particles includes, by weight, about 0% to about 0.15% carbon, about 0% to about 1% manganese, about 14% to about 17% chromium, about 0% to about 0.015% sulfur, about 0% to about 0.5% silicon, about 6% to about 10% iron, with balance nickel and incidental impurities. Another non-limiting example of suitable nickel-based alloy particles includes, by weight, about 0% to about 0.08% carbon, 0% to about 0.35% manganese, about 0% to about 0.015% phosphorus, about 0% to about 0.015% sulfur, about 0% to about 0.35% silicon, about 17% to about 21% chromium, about 2.8% to about 3.3% molybdenum, about 4.75% to about 5.5% columbium, about 0% to about 1% cobalt, about 0% to about 0.006% boron, about 0% to about 0.30% copper, about 0% to about 0.05% tantalum, about 50% to about 55% nickel, with balance iron and incidental impurities.

The average particle size of the particles 24 can range from about 1µm to about 100 µm, such as from about 1µm to about 50 µm, such as from about 5 µm to about 40 µm, such as from about 10 µm to about 30 µm.

In certain embodiments, cold spray methods may be utilized to form a coating that is a hybrid coating (e.g., a combination of materials) and/or has a graded coating composition. For example, multiple spray guns may be utilized to form such a coating composition. Alternatively, the particle feedstock composition may be intermittently changed during the cold spray deposition process.

Optionally, in certain embodiments, the component 10 can be prepared prior to exposure to the cold spray process. Example preparations include cleaning and/or degreasing the surface 12. In one embodiment, a prepared region of the surface 12 is formed by removing existing material or a layer, such as an oxide layer, from the surface 12 of the component 10 so that the resultant coating is formed directly on the material of the component 10 and bonds directly to the component 10.

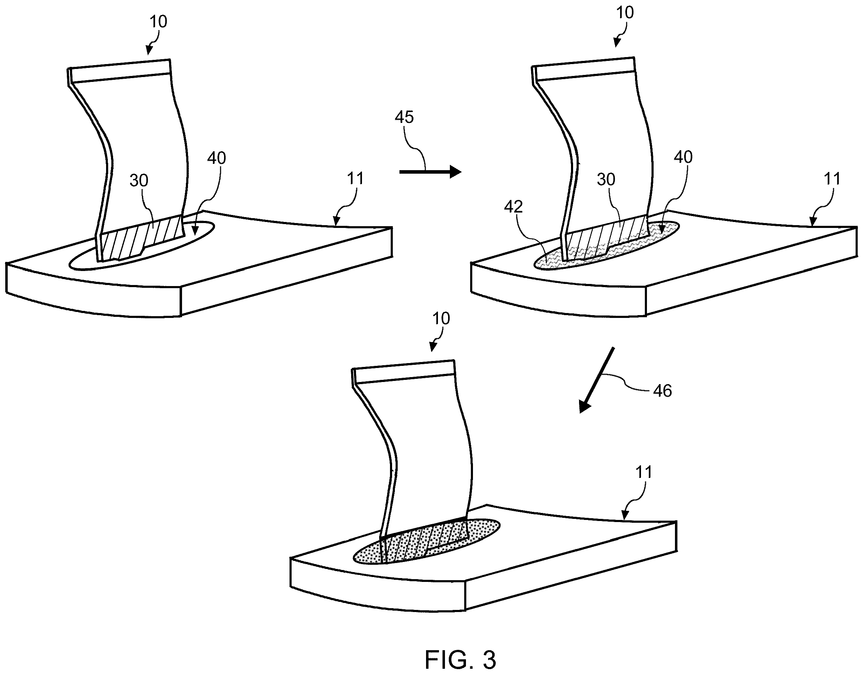

As shown in FIGS. 2 and 3, upon deposition, the particles 24 form a coating 30 on the surface 12 of the component 10. While the coating 30 is formed on a portion of the surface 12 of the component in FIGS. 2 and 3, the disclosure herein is not so limited. Indeed, the entire surface 12 or a majority of the surface 12 of the component can be coated. Certain sections or portions of the coating 30 can be removed from the component 10 either before or after braze treatment. In embodiments, the coating 30 may have an applied thickness of from about 0.4 mils to about 1500 mils.

Heat treatment of the coating 30 can further enhance mechanical properties of the coating 30. In one embodiment, the coating 30 may be heated concurrently during the cold spray process in order to potentially reduce or eliminate post-spray heat treatments. In one embodiment, the coating 30 is heated to a treatment temperature of about 250° C. to about 1000° C. (e.g., about 400° C. to about 500° C.) during the cold spraying process. In other embodiments, thermal energy may be directed to the coating 30 after its formation (e.g., using a heat gun, a hot isostatic press, or other heating device). In other embodiments, the component 10 can be heat treated after deposition of the coating 30. For example, the component 10 may be placed in an oven and heated for heat treatment of the coating 30. In one embodiment, the coating 30 is heated to a treatment temperature of about 900° C. to about 1300° C. (e.g., about 1000° C. to about 1200° C.) after its formation by the cold spraying process. Such a heat treatment may be performed for a period of at least about 30 minutes, such as about 30 minutes to about 5 hours (e.g., about 1 hour to about 4 hours).

In one embodiment, the coating 30 is a highly dense coating that may lead to an increase in tensile strength of the material of the component 10. For example, the porosity of the coating 30 may be about 5% or less (e.g., about 0.1% to about 5%) upon heat treatment of the coating 30. The coating 30 may have a tensile strength that is about 100% to about 130% of the tensile strength of the original Ni-based alloy component (e.g., about 110% to about 125%). Heat treatments may also close any delamination at the interface of the coating 30 and may facilitate the formation of a diffusion bond with the underlying layers/surfaces of the component 10.

Referring now to FIG. 3, after component 10 is coated with the coating 30 it can be joined to another component 11 and bonded through brazing. As shown, components 10,11 are disposed such that a joint gap 40 is formed between components 10,11. Optionally, surfaces of the second component 11 can be coated according to the processes described herein for coating component 10 (not shown). As shown, the coating 30 is formed on component 10 generally about a braze region of the component 10. The braze region of component 10 refers to a portion of the component 10 that is subjected to a braze material 42 during subsequent brazing procedures. As provided, utilizing coating 30 on component 10 in the braze region, can prevent oxide layers from forming during brazing, which ensures an effective brazed joint.

In order to join components 10,11 at (45) a braze material 42 is disposed on the joint gap 40. Depending on the desired method of application, the braze material 42 can take several forms. For example, the braze material 42 may be a paste, in which case the braze material 42 contains an binder and potentially other constituents capable of providing or promoting a paste-like consistency for the braze material 42. A paste of the braze material 42 can be applied directly to components 10,11 and then subjected to a brazing cycle. Alternatively, the braze material 42 could be in the form of a tape. Another alternative is to form the braze material 42 as a rigid pre-sintered preform. The braze material 42 can include a metallic alloy with a melting point lower than the components 10,11 being joined.

At (46) the braze material 42 is heated to form a liquid braze material that flows and fills the joint gap 40 between components 10,11. In embodiments, the braze material 42 is heated to a braze temperature ranging from about 1850°F to about 1900°F. The liquid braze material is then cooled such that component 10 is bonded to component 11. The result is a structural joint that is produced without detrimentally affecting the metallurgical properties of the joined components 10,11.

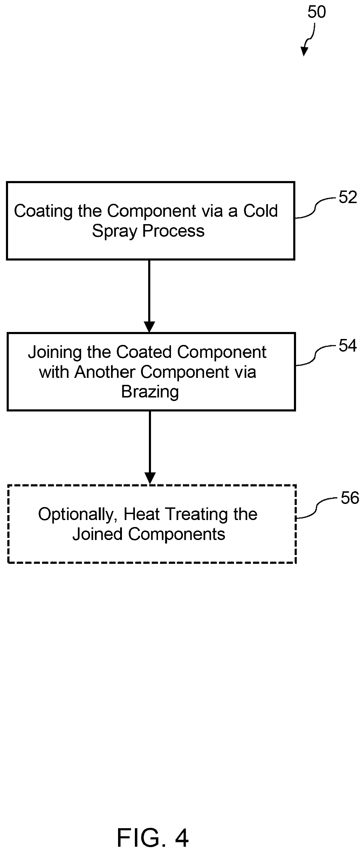

FIG. 4 shows an exemplary method 50 of forming a coating on a component and joining the coated component with another component via brazing. The method 50 may include any of the description above. At 52, at least a portion of the surface of a component is coated via a cold spray process. For example, a stream of feedstock particles can be sprayed onto the surface of the component to form a coating thereon. In embodiments, the feedstock particles comprise a nickel-based alloy and the resultant coating includes a nickel-containing coating. The nickel-containing coating can be deposited on a braze region of the component. The braze region of the component refers to a portion of the component exposed to braze material during a subsequent brazing process. At 54, the coated component is joined, via brazing, to a second component. Optionally, at 56 the joined components can be heat treated.

Further aspects of the invention are provided by the subject matter of the following clauses:
A method for joining two or more metallic components, comprising: operating a cold-spray apparatus to deposit a feedstock comprising nickel-based alloy particles on a braze region of a first metallic component to form a nickel-containing coating on the braze region; and brazing the first metallic component and a second metallic component by exposing the braze region to a braze material to form a braze joint that bonds the first metallic component to the second metallic component.

The method of any preceding clause, wherein the nickel-based alloy particles comprise, by weight, about 0% to about 0.15% carbon, about 0% to about 1% manganese, about 14% to about 17% chromium, about 0% to about 0.015% sulfur, about 0% to about 0.5% silicon, about 6% to about 10% iron, with balance nickel and incidental impurities.

The method of any preceding clause, wherein the nickel-based alloy particles comprise, by weight, about 0% to about 0.08% carbon, 0% to about 0.35% manganese, about 0% to about 0.015% phosphorus, about 0% to about 0.015% sulfur, about 0% to about 0.35% silicon, about 17% to about 21% chromium, about 2.8% to about 3.3% molybdenum, about 4.75% to about 5.5% columbium, about 0% to about 1% cobalt, about 0% to about 0.006% boron, about 0% to about 0.30% copper, about 0% to about 0.05% tantalum, about 50% to about 55% nickel, with balance iron and incidental impurities.

The method of any preceding clause, wherein the nickel-based alloy particles have an average particle size of from about 1µm to about 100 µm.

The method of any preceding clause, wherein the nickel-based alloy particles have an average particle size of from about 1µm to about 50 µm.

The method of any preceding clause, wherein the first component comprises a nickel-based superalloy, a cobalt-based superalloy, or an iron-based superalloy.

The method of any preceding clause, wherein operating the cold-spray apparatus to deposit the feedstock on at least a portion of the first metallic component comprises spraying multiple streams of the nickel-based alloy particles onto the first metallic component to form the nickel-containing coating.

The method of any preceding clause, wherein the nickel-containing coating has an applied thickness of from about 0.4 mils to about 1500 mils.

The method of any preceding clause, wherein the nickel-based alloy particles are deposited at a spray temperature of about 500°C to about 1100°C.

The method of any preceding clause, wherein operating the cold spray apparatus comprises accelerating the feedstock to a velocity in the range of from about 500 m/s to about 1100 m/s.

The method of any preceding clause, wherein brazing the first metallic component and the second metallic component comprises: forming a joint gap between the first metallic component and the second metallic component; disposing a braze material adjacent to the joint gap; heating the braze material to a brazing temperature above the melting point of the braze material to cause the braze material to melt and flow into the joint gap; and allowing the braze material to cool to form a bond between the first metallic component and the second metallic component.

The method of any preceding clause, wherein the braze temperature is from about 1850°F to about 1900°F.

The method of any preceding clause, further comprising operating the cold-spray apparatus to deposit the feedstock on at least a portion of the second metallic component forming a nickel-containing coating on the second metallic component.

The method of any preceding clause, further comprising operating the cold-spray apparatus to deposit the feedstock on the second metallic component forming a nickel-containing coating thereon, wherein the nickel-containing coating is disposed on a portion of the second metallic component used to form the braze joint.

The method of any preceding clause, further comprising, after brazing the first metallic component and second metallic component, subjecting the first metallic component and second metallic component to a heat treatment.

The method of any preceding clause, wherein the first metallic component and second metallic component comprise the same metal.

The method of any preceding clause, wherein the first metallic component and second metallic component comprise different metals.

The method of any preceding clause, wherein the first metallic component, the second metallic component, or both are components for a gas turbine engine.

The method of any preceding clause, wherein the components for a gas turbine engine comprise blades, vanes, buckets, nozzles, and combinations thereof.

This written description uses examples to describe the disclosure, including the best mode, and also to enable any person skilled in the art to practice the disclosure, including making and using any devices or systems and performing any incorporated methods. The patentable scope of the disclosure is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A method for joining two or more metallic components (10,11), comprising:
operating a cold-spray apparatus to deposit a feedstock comprising nickel-based alloy particles on a braze region of a first metallic component (10) to form a nickel-containing coating (30) on the braze region; and
brazing the first metallic component (10) and a second metallic component (11) by exposing the braze region to a braze material (42) to form a braze joint that bonds the first metallic component (10) to the second metallic component (11).

2. The method of any preceding claim, wherein the nickel-based alloy particles comprise, by weight, 0% to 0.15% carbon, 0% to 1% manganese, 14% to 17% chromium, 0% to 0.015% sulfur, 0% to 0.5% silicon, 6% to 10% iron, with balance nickel and incidental impurities.

3. The method of any preceding claim, wherein the nickel-based alloy particles comprise, by weight, 0% to 0.08% carbon, 0% to 0.35% manganese, 0% to 0.015% phosphorus, 0% to 0.015% sulfur, 0% to 0.35% silicon, 17% to 21% chromium, 2.8% to 3.3% molybdenum, 4.75% to 5.5% columbium, 0% to 1% cobalt, 0% to 0.006% boron, 0% to 0.30% copper, 0% to 0.05% tantalum, 50% to 55% nickel, with balance iron and incidental impurities.

4. The method of any preceding claim, wherein the nickel-based alloy particles have an average particle size of from 1 µm to 100 µm, preferably from 1 µm to 50 µm.

5. The method of any preceding claim, wherein the first metallic component (10) comprises a nickel-based superalloy, a cobalt-based superalloy, or an iron-based superalloy.

6. The method of any preceding claim, wherein operating the cold-spray apparatus to deposit the feedstock on the first metallic component (10) comprises spraying multiple streams of the nickel-based alloy particles onto the first metallic component (10) to form the nickel-containing coating (30).

7. The method of any preceding claim, wherein the nickel-containing coating (30) has an applied thickness of from 0.4 mils to 1500 mils.

8. The method of any preceding claim, wherein the nickel-based alloy particles are deposited at a spray temperature of 500°C to 1100°C.

9. The method of any preceding claim, wherein operating the cold-spray apparatus comprises accelerating the feedstock to a velocity in a range of from about 500 m/s to about 1100 m/s.

10. The method of any preceding claim, wherein brazing the first metallic component (10) and the second metallic component (11) comprises:
forming a joint gap (40) between the first metallic component (10) and the second metallic component (11);
disposing the braze material (42) adjacent to the joint gap (40);
heating the braze material (42) to a brazing temperature above a melting point of the braze material (42) to cause the braze material (42) to melt and flow into the joint gap (40); and
allowing the braze material (42) to cool to bond the first metallic component (10) and the second metallic component (11).

11. The method of claim 10, wherein the braze temperature is from 1850°F to 1900°F.

12. The method of any preceding claim, further comprising operating the cold-spray apparatus to deposit the feedstock on the second metallic component (11) forming a nickel-containing coating thereon, wherein the nickel-containing coating is disposed on a portion of the second metallic component (11) used to form the braze joint.

13. The method of any preceding claim, further comprising, after brazing the first metallic component (10) and second metallic component (11), subjecting the first metallic component (10) and second metallic component (11) to a heat treatment.

14. The method of any preceding claim, wherein the first metallic component (10) and second metallic component (11) comprise the same metal or comprise different metals.

15. The method of any preceding claim, wherein the first metallic component (10), the second metallic component (11), or both are components for a gas turbine engine.
